# EUROPÄISCHE PATENTSCHRIFT

(11) **EP 2 404 534 B1**
(45) Veröffentlichungstag und Bekanntmachung des Hinweises auf die Patenterteilung: **13.08.2014**
(21) Anmeldenummer: 11004563.0
(22) Anmeldetag: 04.06.2011
(51) Int. Cl.: A47J 31/42, A47J 42/16

(54) **Mahlwerk**
Grinder
Broyeur

(30) Priorität: 05.07.2010 DE 102010017721
(43) Veröffentlichungstag der Anmeldung: 11.01.2012
(73) Patentinhaber: Severin Elektrogeräte GmbH, 59846 Sundern (DE)
(72) Erfinder: Kroesen, Klaus, 46509 Xanten (DE); Beule, Sebastian, 57392 Bad Fredeburg (DE)
(74) Vertreter: Köchling, Conrad-Joachim

(56) Entgegenhaltungen:
- CH-A- 339 709
- DE-U1- 9 115 709

## Beschreibung

Die Erfindung betrifft ein Mahlwerk für Mahlgut mit einem Gehäuse, einem im Gehäuse drehbar gelagerten Mahlscheibenhalter, an dem eine erste ringförmige Mahlscheibe fixiert ist, einer im Gehäuse unverdrehbar gehaltenen zweiten ringförmigen Mahlscheibe, einer obenliegenden Gehäuseöffnung zum Einfüllen von Mahlgut, einer seitlich am Gehäuse ausgebildeten Abgabeöffnung für gemahlenes Mehl, sowie einem elektrischen Antrieb zum Drehen des Mahlscheibenhalters.

Derartige Mahlwerke sind im Stand der Technik bekannt. Diese Mahlwerke arbeiten mit zwei Mahlscheiben, die ringförmig ausgebildet sind, wobei eine der Mahlscheiben feststeht und die andere Mahlscheibe rotiert. Sie ist mittels eines Mahlscheibenhalters mit einem elektrischen Antrieb gekoppelt. Das Mahlgut wird zentral von oben über eine Öffnung in das Gehäuse eingefüllt. In diese Öffnung ragt ein Konus des Mahlscheibenhalters, durch den das Mahlgut nach radial außen in den Spalt zwischen den Scheiben transportiert wird. Das von der Mitte her zugeführte Mahlgut wird durch die Mahlscheiben zerkleinert und durch Zentrifugalkraft nach außen in einen umlaufenden Mahlkanal befördert. Bei der Zerkleinerung von hartem Mahlgut, beispielsweise Kaffeebohnen, treten hohe impulsartige Belastungen zwischen den Mahlscheiben auf, die durch die Mahlscheiben und deren Lagerung aufgenommen werden müssen. Diese hohe Belastung darf nicht zu einer Bewegung der Scheiben voneinander weg führen, da sich dann zumindest zeitweise der Scheibenabstand und damit der Mahlgrad ändert. Zur Vermeidung von Verstopfungen und Überhitzung muss ebenso sichergestellt sein, dass der umlaufende Mahlgutkanal konstant entleert wird, da sich das Mahlgut ansonsten überhitzt und sich der Mahlgrad ebenfalls ändern kann, da das Mahlgut zu lange zwischen den Mahlscheiben verweilt.

Im Stand der Technik ist es üblich, den rotierenden Mahlscheibenträger mittig jeweils mit einem Axiallager und einem Radiallager zu führen und zu lagern. Diese mittige Anordnung der Lager führt prinzipbedingt dazu, dass ein großer Hebelarm zwischen dem Lager und dem Mahlbereich zwischen den Mahlscheiben gebildet wird, so dass es durch die beim Mahlen der Bohnen auftretende Belastung zu einer starken Biegung des Mahlscheibenträgers kommt. Dies wiederum führt in Verbindung mit einem unvermeidlichen Spiel in den Lagern zu Schwankungen im Mahlscheibenabstand und damit einhergehend zu unerwünschten Schwankungen im Mahlgrad des Mahlgutes. Zudem wird insbesondere die bewegliche Mahlscheibe durch die Biegebelastung stark mechanisch beansprucht, was im ungünstigsten Fall zum Brechen der Mahlscheiben führen kann. Um dies zu vermeiden, wurden übliche Mahlwerke und -scheiben bisher aus relativ teuren Werkstoffen hoher Festigkeit (Metall) hergestellt, die aufwändig mechanisch zu bearbeiten sind. Zur Vermeidung von Verstopfungen im umlaufenden Mahlgutkanal wurde dieser großvolumig gestaltet, was dazu führt, dass das Mahlgut bei seltener Benutzung lange in dem Mahlgutkanal verweilt. Das Mahlgut, beispielsweise Kaffeemehl, verliert dadurch schnell an Aroma und der Kaffee schmeckt unangenehm.

Aus der CH 339709 A ist eine Mühle mit vertikaler Welle zum Mahlen von Kaffee und dergleichen bekannt. Zudem ist aus der DE 91 15 709 U1 eine Mühle, insbesondere Getreidemühle für den Haushalt bekannt.

Ausgehend von diesem Stand der Technik liegt der Erfindung die Aufgabe zugrunde, ein Mahlwerk gattungsgemäßer Art zu schaffen, bei dem Biegebelastungen der Mahlscheiben weitestgehend vermieden sind und ein gleich bleibender Mahlgrad des Mahlgutes erreicht wird. Zudem soll der Abtransport des Mahlgutes aus dem Mahlgutkanal möglichst kontinuierlich erfolgen und Reste sollen im Mahlgutkanal nicht verbleiben.

Zur Lösung dieser Aufgabe wird vorgeschlagen, dass zwischen Mahlscheibenhalter und einem Gehäuseteil ein Schräglager angeordnet ist, und zwar vertikal oder axial unterhalb der ringförmigen Mahlscheiben, wobei der Mahlscheibenhalter mit einem Achsvorsprung den Boden des Gehäuses durchgreift, wobei der Achsvorsprung in einer gehäusefesten Lagerbuchse gelagert ist, und sich mit einem Kragen unter Zwischenanordnung eines Gleitlagers, an einem Kragen der Lagerbuchse axial abstützt.

Dadurch, dass die Schräglager unmittelbar unterhalb der ringförmigen Mahlscheiben angeordnet sind, also nicht mittig, sondern relativ weit radial außen liegend, wird erreicht, dass die Mahlscheiben beim Betrieb des Mahlwerkes unmittelbar durch das Lager gestützt sind, so dass eine vorzügliche Lagerung erreicht wird, bei der Schwankungen in der Mahlschlitzbreite zwischen den Scheiben vermieden werden. Im Ergebnis wird damit ein gleichmäßigeres Mehl beim Mahlen erzeugt. Zudem führt diese Ausbildung dazu, dass Biegebelastungen des Mahlscheibenhalters und der Mahlscheiben vermieden werden, was zu längerer Lebensdauer und störungssicherem Betrieb führt. Auch erlauben es diese Maßnahmen, dass das Mahlwerk bei besserer Mahlgradkonstanz kleiner, leichter und/oder aus günstigeren Materialien gefertigt werden kann.

Um einen guten Gleichlauf des Mahlwerkes sicherzustellen und eine exakte Führung des Mahlscheibenhalters zu gewährleisten, ist vorgesehen, dass der Mahlscheibenhalter mit einem Achsvorsprung den Boden des Gehäuses durchgreift, wobei der Achsvorsprung in einer gehäusefesten Lagerbuchse gelagert ist, und sich mit einem Kragen unter Zwischenanordnung eines Gleitlagers, z.B. eines Federringes, an einem Kragen der Lagerbuchse axial abstützt.

Hierdurch wird der Gleichlauf des Mahlwerkes gefördert.

Insbesondere kann bevorzugt vorgesehen sein, dass das Gleitlager durch einen Federring gebildet ist.

Vorzugsweise ist dabei vorgesehen, dass das Schräglager als Schrägkugellager ausgebildet ist.

Zudem ist bevorzugt vorgesehen, dass das Schräglager ringförmig ausgebildet ist.

Die Schräglager sind so ausgebildet und ausgewählt, dass sowohl axiale als auch radiale Kräfte problemlos aufgenommen werden können.

Um zu vermeiden, dass Mahlgut in den Bereich der Lageranordnung gerät, ist vorgesehen, dass im Gehäuse ein Dichtring, vorzugsweise ein Filzring, an einer Gehäusefläche vorgesehen ist, die der Unterseite des Mahlscheibenhalters benachbart ist und bezogen auf diesen radial außen, außerhalb des Schräglagers ausgebildet ist.

Dabei kann besonders bevorzugt vorgesehen sein, dass das der Dichtring in einer Ringnut angeordnet ist.

Zudem kann dabei besonders bevorzugt vorgesehen sein, dass das der Dichtring aus einem Filzring besteht.

Dieser Dichtring, insbesondere Filzring, schützt das Lager gegen den Eintritt von gemahlenem Mahlgut.

Um einen guten und vollständigen Abtransport des Mahlgutes zu erreichen ist vorgesehen, dass radial außen zwischen den Mahlscheiben und dem Gehäuse ein Spalt für das gemahlene Mehl ausgebildet ist, dass in den Spalt Mitnehmer eingreifen, die fest mit dem Mahlscheibenhalter verbunden oder einstückig mit diesem ausgebildet sind, mittels derer bei Drehung des Mahlscheibenhalters das im Spalt befindliche Mehl zu einer Auswurföffnung des Gehäuses transportierbar ist.

Zum Abtransport des Mahlgutes sind am Mahlscheibenträger entsprechende Mitnehmernasen ausgebildet, mittels derer das Mahlgut im Kanal gefördert wird, bis es an der Auswurföffnung abgegeben wird. Durch diese Ausbildung kann der Spalt relativ klein bemessen werden, wobei dennoch ein guter Abtransport des Mahlgutes und ein vollständiger Abtransport des Mahlgutes erreicht wird.

Bevorzugt ist dabei vorgesehen, dass in Drehrichtung des Mahlscheibenhalters unmittelbar hinter der Auswurföffnung eine Auswurfnase oder - fläche am Gehäuse ausgebildet oder angeordnet ist.

Hierdurch wird das mittels der Mitnehmer zur Abwurföffnung transportierte Mahlgut mit hoher Sicherheit zu der Auswurföffnung geführt, da die Auswurfnase oder Auswurffläche das durch die Mitnehmer mitgenommene Mahlgut zum Auslass, also zur Auswurföffnung hin transportiert. Durch diese Ausbildung wird ein verbesserter Abtransport erreicht, so dass jederzeit frisches Mahlgut geliefert wird und keine Verstopfungen, Überhitzungen oder Übermahlungen durch in dem Spalt verbleibendes Mahlgut bewirkt wird.

Ein Ausführungsbeispiel der Erfindung ist in der Zeichnung dargestellt und im Folgenden näher beschrieben.

Es zeigt:

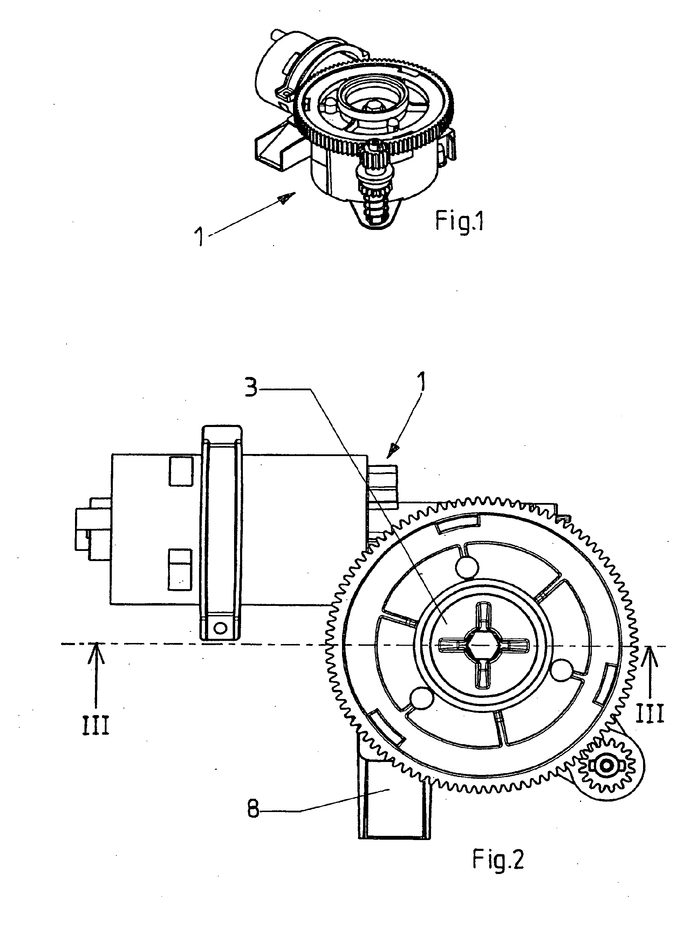

- Figur 1: wesentliche Bestandteile eines Mahlwerkes in Ansicht;
- Figur 2: ein erfindungsgemäßes Mahlwerk nebst zugehöriger Komponenten in Draufsicht gesehen;

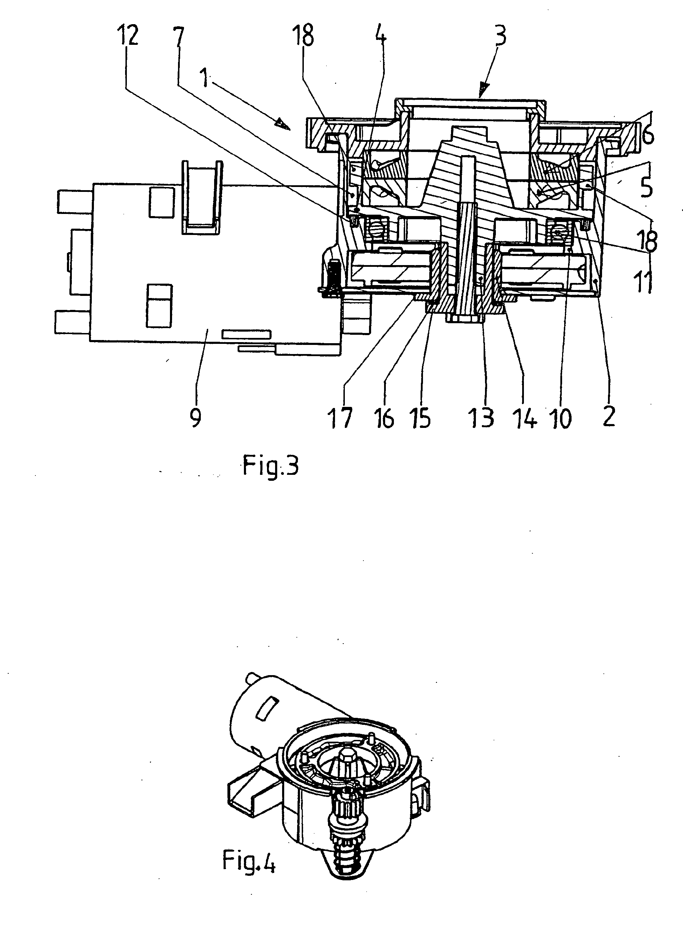

- Figur 3: desgleichen im Schnitt III-III der Figur 2 gesehen;
- Figur 4: eine Ansicht analog Figur 1 gesehen;

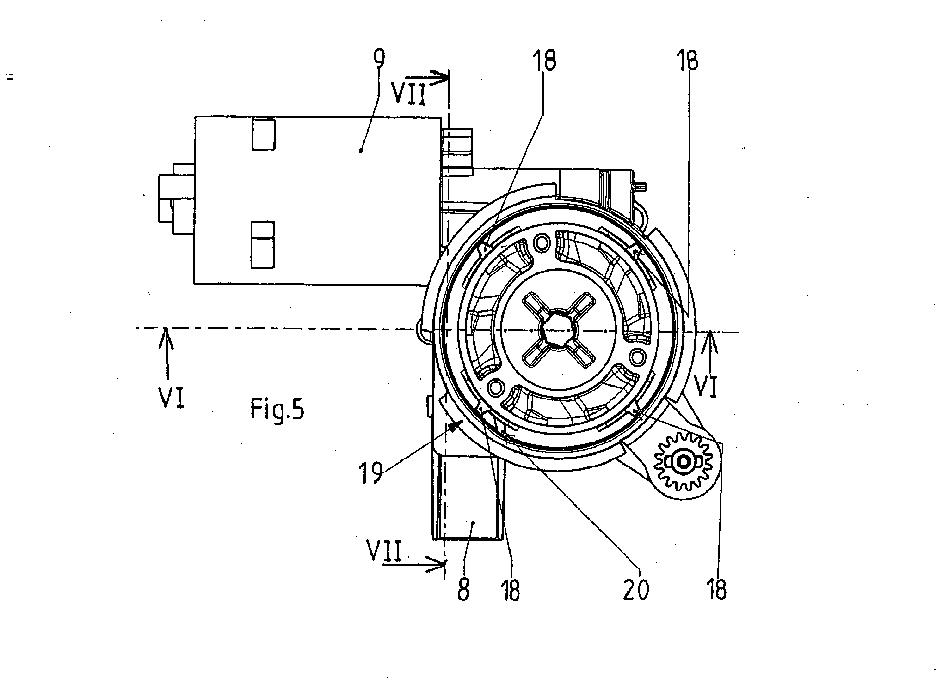

- Figur 5: das Mahlwerk gemäß Figur 4 in Draufsicht gesehen;

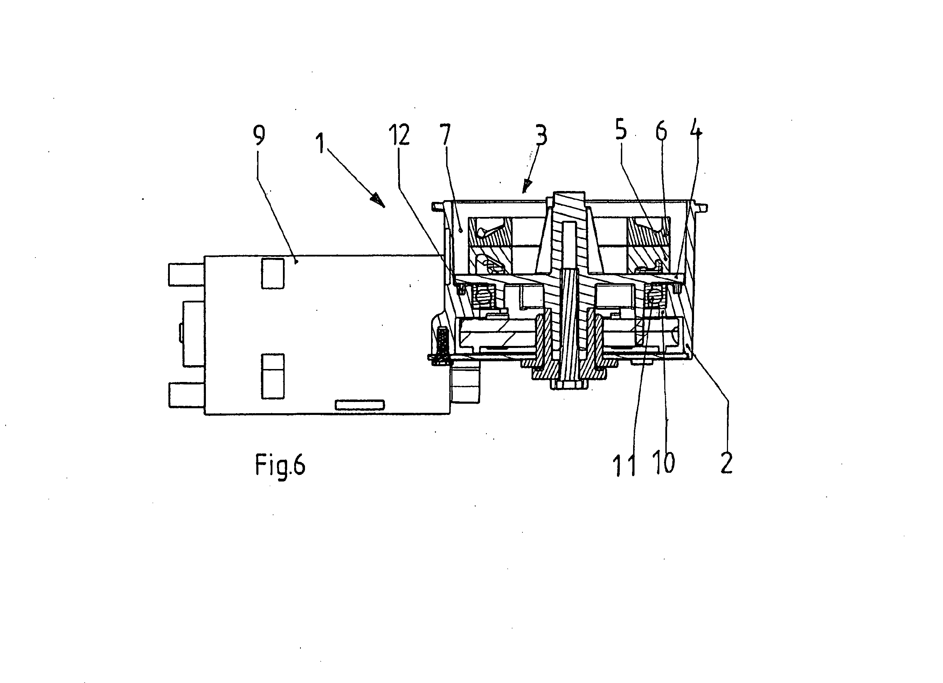

- Figur 6: desgleichen im Schnitt VI-VI der Figur 5 gesehen;

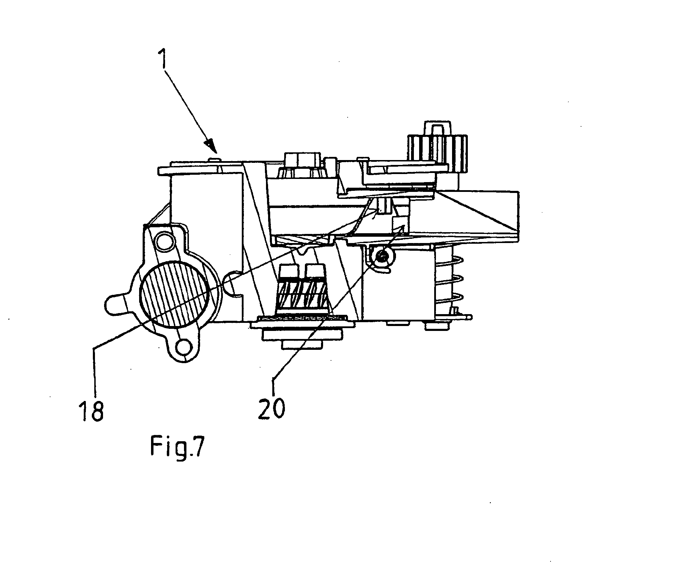

- Figur 7: desgleichen im Schnitt VII-VII der Figur 5 gesehen.

In der Zeichnung ist ganz allgemein ein Mahlwerk 1 für Mahlgut, insbesondere Kaffeebohnen gezeigt. Das Mahlwerk 1 weist ein Gehäuse 2 auf, welches in Gebrauchslage oben eine Einfüllöffnung 3 für Mahlgut aufweist. Im Gehäuse 2 ist ein drehbar gelagerter Mahlscheibenhalter 4 vorgesehen, an dem eine erste ringförmige Mahlscheibe 5 befestigt ist. Oberhalb dieser mit dem Mahlscheibenhalter 4 drehbaren ersten Mahlscheibe 5 ist eine zweite ringförmige Mahlscheibe 6 angeordnet, die gehäusefest gehalten ist, also nicht mitdrehen kann. Zwischen den beiden Mahlscheiben 5,6 ist der Mahlspalt gebildet, in dem Mahlgut gemahlen wird, welches dann aufgrund der Zentrifugalkräfte nach radial außen abgefördert wird. Dabei gelangt das Mahlgut in einen Ringkanal 7. Es wird aus diesem Ringkanal über eine Abgabeschute 8 abgeworfen. Vom Gehäuse 2 geht eine Abgabeöffnung an die Schute 8 ab. Zum Betrieb des Mahlwerkes ist in an sich bekannter Art und Weise ein Elektromotor 9 vorgesehen, der über einen Schneckenantrieb mit dem Mahlscheibenhalter 4 gekoppelt ist, um diesen in Drehbewegung zu versetzten. Das Gehäuse 4 ist in Draufsicht kreisrund ausgebildet.

Gemäß der Erfindung ist zwischen dem Mahlscheibenhalter 4 und einem Gehäuseteil 10 ein Schräglager 11 angeordnet. Dieses ist derart angeordnet, dass es unmittelbar unterhalb der ringförmigen Mahlscheiben 5,6 positioniert ist. Das Schräglager 11 ist als Schrägkugellager ausgebildet, so dass es sowohl axiale als auch radiale Kräfte aufnehmen kann. Im Übrigen ist das Schräglager 11 ringförmig ausgebildet. Eine äußere Lagerschale stützt sich am Gehäuse 2 und dem Gehäuseteil 10 ab, während die innere Lagerschale an Bestandteilen des Mahlscheibenhalters 4 positioniert ist. Durch diese Anordnung wird erreicht, dass beim Betrieb des Mahlwerkes 1 keine wesentlichen Biegekräfte auf die Mahlscheiben 5,6 bzw. den Mahlscheibenhalter 4 einwirken, da die beim Mahlen des Mahlgutes auftretenden Kräfte von dem Schräglager 11 abgefangen werden. Die sich hieraus ergebenden Vorteile sind in der vorangehenden Beschreibung erörtert.

Zusätzlich ist im Gehäuse 2 in einer entsprechenden Ringnut ein Dichtring 12, vorzugsweise ein Filzring, vorgesehen, wobei die Positionierung in der Weise erfolgt, dass der Dichtring 12 an der Unterseite des Mahlscheibenhalters 4 anliegt und zwar radial außerhalb des Schräglagers 11. Hierdurch wird erreicht, dass aufgemahlenes Mahlgut (Mehl) nicht in den Bereich eindringen kann, in dem das Schräglager 11 angeordnet ist.

Der Mahlscheibenhalter 4 durchgreift mit einem Achsvorsprung 13 den Boden des Gehäuses, wobei der Achsvorsprung 13 in einer gehäusefesten Lagerbuchse 14 drehbar gelagert ist und sich mit einem Kragen 15 unter Zwischenanordnung eines Gleitlagers 16, beispielsweise eines Federrings, an einem Kragen 17 der Lagerbuchse 14 abstützt.

Radial außen zwischen den Mahlscheiben 5,6 und dem Gehäuse 2 ist der Spalt 7 für das gemahlene Mehl ausgebildet. In den Spalt 7 greifen Mitnehmer 18 ein, die fest mit dem Mahlscheibenhalter 4 verbunden oder einstückig mit diesem ausgebildet sind. Mittels dieser Mitnehmer 18 wird bei Drehung des Mahlscheibenhalters 4 das im Spalt 7 befindliche Mehl zu der Auswurföffnung 19 und damit zu der Schute 8 geführt.

In Drehrichtung des Mahlscheibenhalters 4 hinter der Auswurföffnung 19 ist eine Aufwurfnase 20 am Gehäuse 2 ausgebildet oder angeordnet. Diese bewirkt, dass das durch die Mitnehmer 18 in dem Spalt 7 geförderte Kaffeemehl oder dergleichen zur Auswurföffnung 19 und zur Abgabeschute 8 zwingend transportiert wird.

Die Erfindung ist nicht auf das Ausführungsbeispiel beschränkt, sondern im Rahmen der Offenbarung vielfach variabel.

## Patentansprüche

1. Mahlwerk (1) für Mahlgut mit einem Gehäuse (2), einem im Gehäuse (2) drehbar gelagerten Mahlscheibenhalter (4), an dem eine erste ringförmige Mahlscheibe (5) fixiert ist, einer im Gehäuse (2) unverdrehbar gehaltenen zweiten ringförmigen Mahlscheibe (6), einer obenliegenden Gehäuseöffnung (3) zum Einfüllen von Mahlgut, einer seitlich am Gehäuse ausgebildeten Abgabeöffnung (19) für gemahlenes Mehl, sowie einem elektrischen Antrieb (9) zum Drehen des Mahlscheibenhalters (4), **dadurch gekennzeichnet, dass** zwischen Mahlscheibenhalter (4) und einem Gehäuseteil (10) ein Schräglager (11) angeordnet ist, und zwar vertikal oder axial unterhalb der ringförmigen Mahlscheiben (5,6), wobei der Mahlscheibenhalter (4) mit einem Achsvorsprung (13) den Boden des Gehäuses (2) durchgreift, wobei der Achsvorsprung (13) in einer gehäusefesten Lagerbuchse (14) gelagert ist, und sich mit einem Kragen (15) unter Zwischenanordnung eines Gleitlagers (16), an einem Kragen (17) der Lagerbuchse (14) axial abstützt.

2. Mahlwerk nach Anspruch 1, **dadurch gekennzeichnet, dass** das Gleitlager (16) durch einen Federring gebildet ist.

3. Mahlwerk nach Anspruch 1 oder 2, **dadurch gekennzeichnet, dass** das Schräglager (11) als Schrägkugellager ausgebildet ist.

4. Mahlwerk nach einem der Ansprüche 1 bis 3, **dadurch gekennzeichnet, dass** das Schräglager (11) ringförmig ausgebildet ist.

5. Mahlwerk nach einem der Ansprüche 1 bis 4, **dadurch gekennzeichnet, dass** im Gehäuse (2) ein Dichtring (12), vorzugsweise ein Filzring, an einer Gehäusefläche vorgesehen ist, die der Unterseite des Mahlscheibenhalters (4) benachbart ist und bezogen auf diesen radial außen, außerhalb des Schräglagers (11) ausgebildet ist.

6. Mahlwerk nach Anspruch 5, **dadurch gekennzeichnet, dass** das der Dichtring (12) in einer Ringnut angeordnet ist.

7. Mahlwerk nach Anspruch 5 oder 6, **dadurch gekennzeichnet, dass** das der Dichtring (12) aus einem Filzring besteht.

8. Mahlwerk nach einem der Ansprüche 1 bis 7, **dadurch gekennzeichnet, dass** radial außen zwischen den Mahlscheiben (5,6) und dem Gehäuse (2) ein Spalt (7) für das gemahlene Mehl ausgebildet ist, dass in den Spalt (7) Mitnehmer (18) eingreifen, die fest mit dem Mahlscheibenhalter (4) verbunden oder einstückig mit diesem ausgebildet sind, mittels derer bei Drehung des Mahlscheibenhalters (4) das im Spalt (7) befindliche Mehl zu einer Auswurföffnung (19) des Gehäuses (2) transportierbar ist.

9. Mahlwerk nach Anspruch 8, **dadurch gekennzeichnet, dass** in Drehrichtung des Mahlscheibenhalters (4) unmittelbar hinter der Auswurföffnung (19) eine Auswurfnase (20) oder -fläche am Gehäuse (2) ausgebildet oder angeordnet ist.

## Claims

1. A grinder (1) for material to be ground, comprising a housing (2), a grinding disc holder (4) rotatably held in the housing (2), at which grinding disc holder (4) a first annular grinding disc (5) is fixed, a second annular grinding disc (6) non-rotatably held in the housing (2), an upper housing opening (3) for filling material to be ground, a dispensing opening (19) laterally provided at the housing for ground flour, and an electric drive (9) for turning the grinding disc holder (4), **characterized by** that between the grinding disc holder (4) and a housing portion (10), an angular bearing (11) is arranged, and that vertically or axially below the annular grinding discs (5, 6), the grinding disc holder (4) passing with an axial projection (13) through the bottom of the housing (2), the axial projection (13) being supported in a stationary bearing bushing (14) and resting, with a collar (15) and a sliding bearing (16) therebetween, axially on a collar (17) of the bearing bushing (14).

2. The grinder according to claim 1, **characterized by** that the sliding bearing (16) is formed by a spring ring.

3. The grinder according to claim 1 or 2, **characterized by** that the angular bearing (11) is formed as an angular roller bearing.

4. The grinder according to one of claims 1 to 3, **characterized by** that the angular bearing (11) has an annular configuration.

5. The grinder according to one of claims 1 to 4, **characterized by** that in the housing (2), a sealing ring (12), preferably a felt ring, is provided on a housing surface that is adjacent to the bottom side of the grinding disc holder (4) and referred thereto is formed radially externally, outside the angular bearing (11).

6. The grinder according to claim 5, **characterized by** that the sealing ring (12) is arranged in an annular groove.

7. The grinder according to claim 5 or 6, **characterized by** that the sealing ring (12) consists of a felt ring.

8. The grinder according to one of claims 1 to 7, **characterized by** that radially externally between the grindings discs (5, 6) and the housing (2), a gap (7) for the ground flour is provided, that driving elements (18) engage in the gap (7), said driving elements (18) being firmly connected with the grinding disc holder (4) or being formed as one piece therewith, and by means of which the flour being in the gap (7) can be conveyed to a dispensing orifice (19) of the housing (2) when the grinding disc holder (4) is turning.

9. The grinder according to claim 8, **characterized by** that in the direction of rotation of the grinding disc holder (4) immediately behind the dispensing orifice (16), an ejection projection (20) or surface is formed or arranged at the housing (2).

## Revendications

1. Broyeur (1) pour matière à broyer, comprenant un boîtier (2), un élément de retenue (4) du disque de broyage maintenu de manière rotative dans le boîtier (2), à cet élément de retenue (4) du disque de broyage un premier disque de broyage annulaire (5) étant fixé, un deuxième disque de broyage annulaire (6) maintenu sans possibilité de rotation dans le boîtier (2), une ouverture de boîtier (3) supérieure pour remplir la matière à broyer, une ouverture de décharge (19) prévue latéralement au boîtier pour la farine broyée, et un entraînement électrique (9) pour tourner l'élément de retenue (4) du disque de broyage, **caractérisé en ce qu'**entre l'élément de retenue (4) du disque de broyage et une partie du boîtier (10), un palier angulaire (11) est disposé, et ce verticalement ou axialement dessous les disques de broyage annulaires (5, 6), l'élément de retenue (4) du disque de broyage passant avec une saillie axiale (13) par le fond du boîtier (2), la saillie axiale (13) étant tenue dans un coussinet de palier (14) stationnaire et reposant, avec interposition d'un collet (15) et d'un palier lisse (16), axialement sur un collet (17) du coussinet de palier (14).

2. Broyeur selon la revendication 1, **caractérisé en ce que** le palier lisse (16) est formé par un anneau de ressort.

3. Broyeur selon la revendication 1 ou 2, **caractérisé en ce que** le palier angulaire (11) est formé comme roulement à billes angulaire.

4. Broyeur selon une des revendications 1 à 3, **caractérisé en ce que** le palier angulaire (11) a une configuration annulaire.

5. Broyeur selon une des revendications 1 à 4, **caractérisé en ce que** dans le boîtier (2), une bague d'étanchéité (12), de préférence une bague en feutre, est prévue sur une face du boîtier qui est voisine du côté inférieur de l'élément de retenue (4) du disque de broyage et est formée par rapport à celui-ci radialement à l'extérieur du palier angulaire (11).

6. Broyeur selon la revendication 5, **caractérisé en ce que** la bague d'étanchéité (12) est disposée dans une rainure annulaire.

7. Broyeur selon la revendication 5 ou 6, **caractérisé en ce que** la bague d'étanchéité (12) consiste en une bague en feutre.

8. Broyeur selon une des revendications 1 à 7, **caractérisé en ce que** radialement à l'extérieur entre les disques de broyage (5, 6) et le boîtier (2), une fente (7) pour la farine broyée est prévue, que des éléments d'entraînement (18) s'engagent dans la fente (7), ces éléments d'entraînement (18) étant solidement liés avec l'élément de retenue (4) du disque de broyage ou étant formés en une pièce avec celui-ci, et au moins desquels la farine se trouvant dans la fente (7) peut être transportée à une ouverture de décharge (19) du boîtier (2).

9. Broyeur selon la revendication 8, **caractérisé en ce que** dans la direction de rotation de l'élément de retenue (4) du disque de broyage immédiatement derrière l'ouverture de décharge (19), une saillie de décharge (20) ou une surface de décharge est formée ou disposée au boîtier (2).
